# EUROPEAN PATENT APPLICATION

(11) **EP 4 769 530 A1**
(43) Date of publication of application: **01.07.2026**
(21) Application number: 25225562.5
(22) Date of filing: 19.12.2025
(51) Int. Cl.: H01M 4/134, H01M 4/36, H01M 4/38, H01M 10/0567

(54) **LITHIUM-ION BATTERY**

(30) Priority: 26.12.2024 CN 202411942122
(71) Applicant: Techtronic Cordless GP, Anderson, SC 29621 (US)
(72) Inventor: HUANG, Xin Yue, Dongguan City (CN); XU, Gang, Dongguan City (CN)
(74) Representative: Meissner Bolte Partnerschaft mbB

(57) **Abstract**

The present invention relates to the field of lithium batteries, and in particular to a lithium-ion battery. The lithium-ion battery includes at least a negative electrode and an electrolyte; the electrolyte includes an additive, the additive contains at least a fluoroethylene carbonate (FEC), and the mass percentage of the FEC in the electrolyte is a; the electrolyte has a conductivity of d ms/cm; the initial Coulombic efficiency of the negative electrode is c; the negative electrode includes a negative electrode active material, the negative electrode active material includes a silicon-based material, and the mass percentage of the silicon-based material in the negative electrode active material is b; and a, b, c, and d meet at least one of the following conditions: 0<a≤0.40; 0<b≤0.40; 0.70≤c<1.00 and/or 4.0≤d≤18.0. The electrolyte in the present invention greatly improves the cycling and safety performance of the lithium-ion battery. The lithium-ion battery in the present invention not only has a high capacity and high initial Coulombic efficiency, but also has excellent cycling performance and safety properties.

## Description

### Technical Field

The present invention relates to the field of lithium batteries, and in particular to a lithium-ion battery.

### Background Art

With the rapid development of lithium-ion battery technology, the demand to increase the energy density of lithium-ion batteries is increasing daily. Hence, silicon-based negative electrode active materials that can increase the capacity of ion batteries are increasingly favored by the relevant technicians. In particular, silicon carbon materials that can simultaneously increase the capacity and the Initial Coulombic Efficiency (ICE) of lithium-ion batteries have already become the negative electrode material of choice for high-capacity lithium-ion batteries today.

However, silicon-based materials (e.g. silicon carbon materials) undergo a large expansion in volume during charging and discharging, and particle breakage can occur. Moreover, with the continuous destruction and re-formation of the Solid Electrolyte Interface (SEI) film, the consumption of electrolyte is increased, resulting in a rapid decline in the cycling capacity of the battery and increased gas production. Thus, the battery's cycle performance and safety performance are poor.

### Summary of the invention

In order to at least solve some of the above technical problems, the present invention provides a type of lithium-ion battery.

In one aspect, the present invention provides a lithium-ion battery, wherein the lithium-ion battery includes at least a negative electrode and an electrolyte;
wherein the initial Coulombic efficiency of the negative electrode is c;
wherein the electrolyte includes an additive, the additive contains at least a fluoroethylene carbonate (FEC), and the mass percentage of the FEC in the electrolyte is a; and
the electrolyte has a conductivity of d ms/cm.

In one embodiment, 0<a≤0.40, for example, a can be 0.40, 0.39, 0.38, 0.37, 0.36, 0.35, 0.34, 0.33, 0.32, 0.31, 0.30, 0.29, 0.28, 0.27, 0.26, 0.25, 0.24, 0.23, 0.22, 0.21, 0.20, 0.19, 0.18, 0.17, 0.16, 0.15, 0.14, 0.13, 0.12, 0.11, 0.10, 0.09, 0.08, 0.07, 0.06, 0.05, 0.04, 0.03, 0.02 or 0.01, or a sub-range consisting of any values within these ranges. Preferably, 0.01<a≤0.30; and most preferably, 0.04<a≤0.25.

In one embodiment, 0.70≤c<1.00, for example, c can be 0.70, 0.71, 0.72, 0.73, 0.74, 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98 or 0.99, or a sub-range consisting of any values within these ranges. Preferably, 0.80≤c<1.00; and most preferably, 0.85≤c<1.00.

In one embodiment, 4.0≤d≤18.0, for example, d can be 4.0, 4.5, 5.0, 5.5, 6.0, 6.5, 7.0, 7.5, 8.0, 8.5, 9.0, 9.5, 10.0, 10.5, 11.0, 11.5, 12.0, 12.5, 13.0, 13.5, 14.0, 14.5, 15.0, 15.5, 16.0, 16.5, 17.0, 17.5 or 18.0, or a sub-range consisting of any values within these ranges. Preferably, 6.0≤d≤16.0; and most preferably, 10.0≤d≤12.0.

In one embodiment, the negative electrode of the lithium-ion battery includes a negative electrode active material, and the negative electrode active material includes a silicon-based material, for example, silicon carbon compounds (e.g. silicon carbide, SiC), silicon-carbon composites (Si/C, e.g. vapor deposited silicon-carbon, e.g., third-generation vapor deposited silicon-carbon), silicon oxides (e.g., silicon dioxide, SiO₂) and elemental silicon, etc., and preferably silicon-carbon composites (Si/C, for example, vapor deposited silicon-carbon, e.g., third-generation vapor deposited silicon-carbon), and the mass percentage of the silicon-based material in the negative electrode active material is b. In a more specific embodiment, negative electrode active materials also include carbon, such as natural or artificial graphite, hard carbon or soft carbon, where natural or artificial graphite is preferred, and the mass percentage of the silicon-based material in the negative electrode active material is b.

In one embodiment, the silicon-carbon composite has a reversible gram-specific capacity of at least 1800mAh/g, for example, 1800, 1900, 2000, 2100 or 2200mAh/g, or a sub-range consisting of any values within these ranges.

In a preferred embodiment, the negative electrode of the lithium-ion battery includes a negative electrode active material, and the negative electrode active material includes a silicon-carbon composite (Si/C, e.g. vapor deposited silicon-carbon) and carbon (e.g. natural or artificial graphite, hard carbon or soft carbon), and the mass percentage of the silicon-carbon composite in the negative electrode active material is b. Most preferably, the negative electrode active material is composed of a silicon-carbon composite (Si/C, e.g. vapor deposited silicon-carbon) and carbon (e.g. natural or artificial graphite, hard carbon or soft carbon, wherein natural or artificial graphite is preferred), and the mass percentage of the silicon-carbon composite in the negative electrode active material is b.

In one embodiment, 0<b≤0.40, for example, b can be 0.40, 0.39, 0.38, 0.37, 0.36, 0.35, 0.34, 0.33, 0.32, 0.31, 0.30, 0.29, 0.28, 0.27, 0.26, 0.25, 0.24, 0.23, 0.22, 0.21, 0.20, 0.19, 0.18, 0.17, 0.16, 0.15, 0.14, 0.13, 0.12, 0.11, 0.10, 0.09, 0.08, 0.07, 0.06, 0.05, 0.04, 0.03, 0.02 or 0.01, or a sub-range consisting of any values within these ranges. Preferably, 0.05<b≤0.35; and most preferably, 0.07<b<0.30.

In a preferred embodiment, 1.0≤b/(a*c)≤2.6, for example, b/(a*c) can be 1.0, 1.1, 1.2, 1.3, 1.4, 1.5, 1.6, 1.7, 1.8, 1.9, 2.0, 2.1, 2.2, 2.3, 2.4, 2.5 or 2.6, or a sub-range consisting of any values within these ranges. Preferably, 1.0<b/(a*c)<2.0.

In one preferred embodiment, 10.0≤(b*d)/(a*c)≤33.0, for example, (b*d)/(a*c) can be 10.0, 10.5, 11.0, 11.5, 12.0, 12.5, 13.0, 13.5, 14.0, 14.5, 15.0, 15.5, 16.0, 16.5, 17.0, 17.5, 18.0, 18.5, 19.0, 19.5, 20.0, 20.5, 21.0, 21.5, 22.0, 22.5, 23.0, 23.5, 24.0, 24.5, 25.0, 25.5, 26.0, 26.5, 27.0, 27.5, 28.0, 28.5, 29.0, 29.5, 30.0, 30.5, 31.0, 31.5, 32.0, 32.5, or 33.0, or a sub-range consisting of any values within these ranges. Preferably, 12.0<(b*d)/(a*c)<25.0.

In one embodiment, the electrolyte also contains a lithium salt.

In one embodiment, the electrolyte also contains 9-20 parts by weight of lithium salt (for example, 9, 10, 11, 12, 13, 14, 15, 16, 17, 18, 19 or 20, or a sub-range consisting of any values within these ranges).

In one embodiment, the electrolyte also contains 9-20wt% of a lithium salt (for example, 9, 10, 11, 12, 13, 14, 15, 16, 17, 18, 19, or 20wt%, or a sub-range consisting of any values within these ranges).

In one embodiment, the lithium salt is selected from at least one of lithium hexafluorophosphate (LiPF₆), lithium bis(fluorosulfonyl)imide (LiFSI), lithium difluoro(oxalato)borate (LiODFB) and lithium difluorophosphate (LiPO₂F₂).

In one embodiment, the electrolyte also contains a solvent.

In a preferred embodiment, the electrolyte also includes 40-80 parts by weight of solvent (for example, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79 or 80, or a sub-range consisting of any values within these ranges).

In a preferred embodiment, the electrolyte also includes 40-80wt% of solvent (for example, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79 or 80wt%, or a sub-range consisting of any values within these ranges).

In one embodiment, the solvent is selected from at least one of ethylene carbonate (EC), ethyl methyl carbonate (EMC) and dimethyl carbonate (DMC).

In one embodiment, the content of the additive is greater than 0 and less than or equal to 35 parts by weight (for example, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34 or 35, or a sub-range consisting of any values within these ranges). Preferably, the content of the additive is greater than or equal to 1 and less than or equal to 30 parts by weight. Most preferably, the content of the additive is greater than or equal to 4 and less than or equal to 25 parts by weight.

In one embodiment, the content of the additive is greater than Owt% and less than or equal to 35wt% (for example, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34 or 35wt%, or a sub-range consisting of any values within these ranges). Preferably, the content of the additive is greater than or equal to 1wt% and less than or equal to 30wt%. Most preferably, the content of the additive is greater than or equal to 4wt% and less than or equal to 25wt%.

In one embodiment, the additive also contains propylene sulfite (PS) and/or adipodinitrile (ADN).

In one embodiment, the electrolyte contains LiPF₆, DMC, EMC, EC and FEC, and an optional component selected from the following: LiODFB, ADN, LiPO₂F₂, LiFSI and PS.

In one embodiment, the electrolyte contains the following components:
10-20 parts by weight of LiPF₆ (for example, 10, 11, 12, 13, 14, 15, 16, 17, 18, 19 or 20, or a sub-range consisting of any values within these ranges);
35-65 parts by weight of DMC (for example, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64 or 65, or a sub-range consisting of any values within these ranges);
1-15 parts by weight of EMC (for example, 1, 2, 3, 4, 5, 6, 7, 8, 9, 10, 11, 12, 13, 14 or 15, or a sub-range consisting of any values within these ranges);
1-25 parts by weight of EC (for example, 1, 2, 3, 4, 5, 6, 7, 8, 9, 10, 11, 12, 13, 14, 15, 16, 17, 18, 19, 20, 21, 22, 23, 24 or 25, or a sub-range consisting of any values within these ranges);
greater than 0 and less than or equal to 25 parts by weight of FEC (for example, 1, 2, 3, 4, 5, 6, 7, 8, 9, 10, 11, 12, 13, 14, 15, 16, 17, 18, 19, 20, 21, 22, 23, 24 or 25, or a sub-range consisting of any values within these ranges); and
an optional component from the following (a value of 0 means the omission of the component):
   0-5 parts by weight of LiODFB (for example, 1, 2, 3, 4 or 5, or a sub-range consisting of any values within these ranges);
   0-5 parts by weight of ADN (for example, 1, 2, 3, 4 or 5, or a sub-range consisting of any values within these ranges);
   0-5 parts by weight of LiPO₂F₂ (for example, 1, 2, 3, 4 or 5, or a sub-range consisting of any values within these ranges);
   0-10 parts by weight of LiFSI (for example, 1, 2, 3, 4, 5, 6, 7, 8, 9 or 10, or a sub-range consisting of any values within these ranges); and
   0-5 parts by weight of PS (for example, 1, 2, 3, 4 or 5, or a sub-range consisting of any values within these ranges).

In one embodiment, the electrolyte contains the following components:
10-20wt% of LiPF₆ (for example, 10, 11, 12, 13, 14, 15, 16, 17, 18, 19 or 20wt%, or a sub-range consisting of any values within these ranges);
35-65wt% of DMC (for example, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64 or 65wt%, or a sub-range consisting of any values within these ranges);
1-15wt% of EMC (for example, 1, 2, 3, 4, 5, 6, 7, 8, 9, 10, 11, 12, 13, 14 or 15wt%, or a sub-range consisting of any values within these ranges);
1-25wt% of EC (for example, 1, 2, 3, 4, 5, 6, 7, 8, 9, 10, 11, 12, 13, 14, 15, 16, 17, 18, 19, 20, 21, 22, 23, 24 or 25wt%, or a sub-range consisting of any values within these ranges);
greater than 0wt% and less than or equal to 25wt% of FEC (for example, 1, 2, 3, 4, 5, 6, 7, 8, 9, 10, 11, 12, 13, 14, 15, 16, 17, 18, 19, 20, 21, 22, 23, 24 or 25wt%, or a sub-range consisting of any values within these ranges); and
an optional component from the following (a value of 0 means the omission of the component):
   0-5wt% of LiODFB (for example, 1, 2, 3, 4 or 5wt%, or a sub-range consisting of any values within these ranges);
   0-5wt% of ADN (for example, 1, 2, 3, 4 or 5wt%, or a sub-range consisting of any values within these ranges);
   0-5wt% of LiPO₂F₂ (for example, 1, 2, 3, 4 or 5wt%, or a sub-range consisting of any values within these ranges);
   0-10wt% of LiFSI (for example, 1, 2, 3, 4, 5, 6, 7, 8, 9 or 10wt%, or a sub-range consisting of any values within these ranges); and
   0-5wt% of PS (for example, 1, 2, 3, 4 or 5wt%, or a sub-range consisting of any values within these ranges).

In a preferred embodiment, the electrolyte contains the following components:
12-17 parts by weight of LiPF₆; 40-60 parts by weight of DMC; 4-10 parts by weight of EMC; 5-20 parts by weight of EC; greater than 0 and less than or equal to 20 parts by weight of FEC; 0-2 parts by weight of LiODFB; 0-1 parts by weight of ADN; 0-1 parts by weight of LiPO₂F₂; 0-5 parts by weight of LiFSI and 0-1 parts by weight of PS.

In a preferred embodiment, the electrolyte contains the following components:
12-17wt% of LiPF₆; 40-60wt% of DMC; 4-10wt% of EMC; 5-20wt% of EC; greater than 0wt% and less than or equal to 20wt% of FEC; 0-2wt% of LiODFB; 0-1wt% of ADN; 0-1wt% of LiPO₂F₂; and 0-5wt% of LiFSI and 0-1wt% of PS.

The electrolyte in the present invention significantly improves the cycling performance of lithium-ion batteries (especially a lithium-ion battery with a negative electrode containing a silicon-based material, and particularly a lithium-ion battery with a negative electrode containing a silicon-carbon composite), and greatly improves the safety performance of lithium-ion batteries.

The lithium-ion battery in the present invention not only has a high capacity and high initial Coulombic efficiency, but also has excellent cycling performance and safety properties.

### Detailed Description of Embodiments

Specific embodiments of the present invention are now described in detail. Only preferred embodiments of the present invention are described here; those skilled in the art can conceive of other ways of realizing the present invention on the basis of these preferred embodiments, and such other ways likewise fall within the scope of the present invention. In some embodiments, to avoid confusion with the present invention, certain technical features which are well known in the art are not described.

Unless otherwise defined, all technical and scientific terms used in the present invention have the same meanings as commonly understood by those skilled in the art. In case of conflict, the present invention (including definitions) shall prevail. Only illustrative methods and materials are described below; methods and materials similar or equivalent to those described in the present invention may all be used in experiments or tests of the present invention. The materials, methods and examples disclosed in the present invention are merely illustrative, and are not intended to limit the protective scope of the invention.

In the present invention, the values may be rounded approximate values.

In the present invention, all defined interval ranges include endpoint values.

In the present invention, unless otherwise stated, each test is performed at room temperature. The parameters are all measured at room temperature. Said room temperature may be 10 - 35°C, preferably 20 - 30°C, and most preferably 25°C.

In the present invention, unless otherwise stated, any mentioned percentages, proportions, ratios, contents or numbers of parts are by weight.

### Lithium-ion battery

An illustrative lithium-ion battery contains a casing, and a positive electrode, negative electrode, separator and electrolyte all contained within the casing.

An illustrative lithium-ion battery may be a secondary battery.

An illustrative lithium-ion battery may be, for example, a cylindrical battery (e.g., 14500, 18650, 18500, 26650, 21700, etc.), a prism battery (e.g. 3578131, 3463110, 3845120, 366090, 3435165, 2453135, etc.) and other lithium batteries of various models and specifications.

### Positive electrode

An illustrative positive electrode generally may comprise a positive electrode material and a positive electrode current collector. The positive electrode material is formed on a surface of the positive electrode current collector. The positive electrode material may be formed on only one side of the positive electrode current collector, or on the front and back sides of the positive electrode current collector.

An illustrative positive electrode material can have a certain thickness, for example, 30µ m to 200µ m.

An illustrative positive electrode current collector can be a variety of suitable materials and forms, e.g. materials such as aluminum, stainless steel, nickel, copper, titanium and carbon, etc., and forms such as foil, sheet, mesh, etc. Examples are aluminum foil, aluminum mesh, perforated aluminum sheet, expanded aluminum sheet, stainless steel foil, stainless steel mesh, perforated stainless steel sheet, expanded stainless steel sheet, expanded nickel, non-woven nickel fabric, copper foil, copper mesh, perforated copper sheet, expanded copper sheet, titanium foil, titanium mesh, non-woven carbon fabric, carbon cloth, etc.

An illustrative positive electrode can be in a variety of suitable forms, for example a sheet.

An illustrative positive electrode material may contain a positive electrode active material, a binder and/or a conductive agent.

An illustrative positive electrode material may contain a particular amount of positive electrode active material (for example, 90wt% to 99wt%). An illustrative positive electrode material can also consist essentially of only a positive electrode active material, or it can contain optional components (for example, binders and/or conductive agents).

There are no particular restrictions on the positive electrode active material, with an illustrative positive electrode active material comprising at least one of lithium nickel manganese cobalt oxide, lithium manganese oxide, lithium cobalt oxide, lithium nickel oxide, lithium nickel cobalt aluminum oxide and lithium iron phosphate.

An illustrative binder is selected from at least one of polyvinylidene fluoride (PVDF), carboxymethylcellulose, styrene-butadiene rubber, polybenzimidazole, polyimide, polyvinyl acetate, polyacrylonitrile, polyvinyl alcohol, starch, hydroxypropylmethylcellulose, regenerated cellulose, polyvinylpyrrolidone, polyethylene, polypropylene, polystyrene, poly(methyl methacrylate), polyaniline, acrylonitrile-butadiene-styrene copolymer, phenolic resin, epoxy resin, polyethylene terephthalate, polytetrafluoroethylene, polyphenylene sulfide, polyamide-imide, polyetherimide, polyethylenesulfone, polyacetal, polyphenylene ether, polybutylene terephthalate, ethylene-propylene-diene terpolymer, sulfonated ethylene-propylene-diene terpolymer, fluorocarbon rubber and various copolymers.

An illustrative positive electrode material may contain a particular amount of binder (for example, 0.1wt% to 10wt%).

An illustrative conductive agent is selected from at least one of conductive carbon black, superconductive carbon black, carbon nanotubes, vapor grown carbon fibers and graphite conductive agents.

An illustrative positive electrode material may contain a particular amount of conductive agent (for example, 0.1wt% to 10wt%).

An illustrative positive electrode may be prepared by applying a positive electrode slurry containing a positive electrode material (which may contain a positive electrode active material, a binder, a conductive agent and/or an additive) to a positive electrode current collector, and drying the slurry. The positive electrode material may be further compacted onto the current collector using a pressing method known to a person skilled in the art. An illustrative positive electrode slurry may be prepared by combining positive electrode material components (a positive electrode active material, a binder, a conductive agent and an additive) and adding a suitable solvent (e.g. N-methylpyrrolidone (NMP)).

### Negative electrode

An illustrative negative electrode generally may comprise a negative electrode material and a negative electrode current collector.

An illustrative negative electrode material may contain a negative electrode active material, a binder, and/or a conductive agent. The negative electrode material is formed on a surface of the negative electrode current collector. The negative electrode material may be formed on only one side of the negative electrode current collector, or on the front and back sides of the negative electrode current collector.

An illustrative negative electrode material can have a certain thickness, for example, 30µ m to 200µ m.

An illustrative negative electrode current collector can be a variety of suitable materials and forms, e.g. materials such as aluminum, stainless steel, nickel, copper, titanium and carbon, etc., and forms such as foil, sheet, mesh, etc. Examples are aluminum foil, aluminum mesh, perforated aluminum sheet, expanded aluminum sheet, stainless steel foil, stainless steel mesh, perforated stainless steel sheet, expanded stainless steel sheet, expanded nickel, non-woven nickel fabric, copper foil, copper mesh, perforated copper sheet, expanded copper sheet, titanium foil, titanium mesh, non-woven carbon fabric, carbon cloth, etc.

An illustrative negative electrode can be in a variety of suitable forms, for example a sheet.

There are no particular restrictions on the negative electrode active material, with a silicon-based material being preferred, for example, silicon carbon compounds (e.g. silicon carbide, SiC), silicon-carbon composites (Si/C, e.g. vapor deposited silicon-carbon, e.g., third-generation vapor deposited silicon-carbon), silicon oxides (e.g., silicon dioxide, SiO₂) and elemental silicon, etc., and preferably silicon-carbon composites (Si/C, for example, vapor deposited silicon-carbon, e.g., third-generation vapor deposited silicon-carbon), and the mass percentage of the silicon-based material in the negative electrode active material is b. The negative electrode active material may also contain carbon, such as natural or artificial graphite, hard carbon or soft carbon.

In one preferred embodiment, the negative electrode active material includes a silicon-carbon composite (Si/C, e.g., vapor deposited silicon-carbon) and carbon (e.g., natural or artificial graphite, hard carbon or soft carbon), and the mass percentage of the silicon-carbon composite in the negative electrode active material is b. Most preferably, the negative electrode active material is composed of a silicon-carbon composite (Si/C, e.g., vapor deposited silicon-carbon) and carbon (e.g., natural or artificial graphite, hard carbon or soft carbon), and the mass percentage of the silicon-carbon composite in the negative electrode active material is b.

An illustrative silicon-carbon composite has a reversible gram-specific capacity of at least 1800mAh/g, for example, 1800, 1900, 2000, 2100, or 2200mAh/g, or a sub-range consisting of any values within these ranges.

An illustrative negative electrode material may contain a particular amount of negative electrode active material (for example, 90wt% to 99wt%). An illustrative negative electrode material can also consist essentially of only a negative electrode active material.

An illustrative negative electrode may be prepared by applying a negative electrode slurry containing negative electrode material components (which may contain a negative electrode active material, a binder and a conductive agent) to a current collector, and drying the slurry on the current collector. The negative electrode material may be further compacted onto the current collector using a pressing method known to a person skilled in the art. An illustrative negative electrode slurry may be prepared by combining negative electrode material components (a negative electrode active material, a binder and a conductive agent) and adding a suitable solvent (e.g. NMP).

In addition, a binder and/or a conductive agent may optionally be contained in the negative electrode material, and may be the same (or substantially the same) as those described in relation to the positive electrode material, and so are not elaborated further in the present invention.

### Separator

There are no particular restrictions on the separator of the lithium-ion battery of the present invention. An illustrative separator is a separator prepared from a polymer such as polypropylene (PP) or polyethylene (PE).

### Electrolyte

The electrolyte for use in the lithium-ion battery in the present invention includes an additive, wherein the additive contains at least a fluoroethylene carbonate (FEC), and the mass percentage of the FEC in the electrolyte is a;
the initial Coulombic efficiency of the negative electrode of the lithium-ion battery is c; and
the electrolyte has a conductivity of d ms/cm.

In one embodiment, 0<a≤0.40, for example, a can be 0.40, 0.39, 0.38, 0.37, 0.36, 0.35, 0.34, 0.33, 0.32, 0.31, 0.30, 0.29, 0.28, 0.27, 0.26, 0.25, 0.24, 0.23, 0.22, 0.21, 0.20, 0.19, 0.18, 0.17, 0.16, 0.15, 0.14, 0.13, 0.12, 0.11, 0.10, 0.09, 0.08, 0.07, 0.06, 0.05, 0.04, 0.03, 0.02 or 0.01, or a sub-range consisting of any values within these ranges. Preferably, 0.01<a≤0.30; and most preferably, 0.04<a≤0.25.

In one embodiment, 0<b≤0.40, for example, b can be 0.40, 0.39, 0.38, 0.37, 0.36, 0.35, 0.34, 0.33, 0.32, 0.31, 0.30, 0.29, 0.28, 0.27, 0.26, 0.25, 0.24, 0.23, 0.22, 0.21, 0.20, 0.19, 0.18, 0.17, 0.16, 0.15, 0.14, 0.13, 0.12, 0.11, 0.10, 0.09, 0.08, 0.07, 0.06, 0.05, 0.04, 0.03, 0.02 or 0.01, or a sub-range consisting of any values within these ranges. Preferably, 0.05<b≤0.35; and most preferably, 0.07<b<0.30.

In one embodiment, 0.70≤c<1.00, for example, c can be 0.70, 0.71, 0.72, 0.73, 0.74, 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98 or 0.99, or a sub-range consisting of any values within these ranges. Preferably, 0.80≤c<1.00; and most preferably, 0.85≤c<1.00.

In one embodiment, 4.0≤d≤18.0, for example, d can be 4.0, 4.5, 5.0, 5.5, 6.0, 6.5, 7.0, 7.5, 8.0, 8.5, 9.0, 9.5, 10.0, 10.5, 11.0, 11.5, 12.0, 12.5, 13.0, 13.5, 14.0, 14.5, 15.0, 15.5, 16.0, 16.5, 17.0, 17.5 or 18.0, or a sub-range consisting of any values within these ranges. Preferably, 6.0≤d≤16.0; and most preferably, 10.0≤d≤12.0.

In one embodiment, the negative electrode of the lithium-ion battery includes a negative electrode active material, and the negative electrode active material includes a silicon-based material, for example, silicon carbon compounds (e.g. silicon carbide, SiC), silicon-carbon composites (Si/C, e.g. vapor deposited silicon-carbon, e.g., third-generation vapor deposited silicon-carbon), silicon oxides (e.g., silicon dioxide, SiO₂) and elemental silicon, etc., and preferably silicon-carbon composites (Si/C, for example, vapor deposited silicon-carbon, e.g., third-generation vapor deposited silicon-carbon), and the mass percentage of the silicon-based material in the negative electrode active material is b. In a more specific embodiment, negative electrode active materials also include carbon, such as natural or artificial graphite, hard carbon or soft carbon, where natural or artificial graphite is preferred, and the mass percentage of the silicon-based material in the negative electrode active material is b.

In one embodiment, the silicon-carbon composite has a reversible gram-specific capacity of at least 1800mAh/g, for example, 1800, 1900, 2000, 2100 or 2200mAh/g, or a sub-range consisting of any values within these ranges.

In a preferred embodiment, the negative electrode of the lithium-ion battery includes a negative electrode active material, and the negative electrode active material includes silicon-carbon composites (Si/C, e.g. vapor deposited silicon-carbon) and carbon (e.g. natural or artificial graphite, hard carbon or soft carbon), and the mass percentage of the silicon-carbon composite in the negative electrode active material is b. Most preferably, the negative electrode active material is composed of a silicon-carbon composite (Si/C, e.g. vapor deposited silicon-carbon) and carbon (e.g. natural or artificial graphite, hard carbon or soft carbon, wherein natural or artificial graphite is preferred), and the mass percentage of the silicon-carbon composite in the negative electrode active material is b.

In a preferred embodiment, 1.0≤b/(a*c)≤2.6, for example, b/(a*c) can be 1.0, 1.1, 1.2, 1.3, 1.4, 1.5, 1.6, 1.7, 1.8, 1.9, 2.0, 2.1, 2.2, 2.3, 2.4, 2.5 or 2.6, or a sub-range consisting of any values within these ranges. Preferably, 1.0<b/(a*c)<2.0.

In one preferred embodiment, 10.0≤(b*d)/(a*c)≤33.0, for example, (b*d)/(a*c) can be 10.0, 10.5, 11.0, 11.5, 12.0, 12.5, 13.0, 13.5, 14.0, 14.5, 15.0, 15.5, 16.0, 16.5, 17.0, 17.5, 18.0, 18.5, 19.0, 19.5, 20.0, 20.5, 21.0, 21.5, 22.0, 22.5, 23.0, 23.5, 24.0, 24.5, 25.0, 25.5, 26.0, 26.5, 27.0, 27.5, 28.0, 28.5, 29.0, 29.5, 30.0, 30.5, 31.0, 31.5, 32.0, 32.5, or 33.0, or a sub-range consisting of any values within these ranges. Preferably, 12.0<(b*d)/(a*c)<25.0.

In one embodiment, the electrolyte also contains a lithium salt.

In one embodiment, the electrolyte also contains 9-20 parts by weight of lithium salt (for example, 9, 10, 11, 12, 13, 14, 15, 16, 17, 18, 19 or 20, or a sub-range consisting of any values within these ranges).

In one embodiment, the electrolyte also contains 9-20wt% of a lithium salt (for example, 9, 10, 11, 12, 13, 14, 15, 16, 17, 18, 19, or 20wt%, or a sub-range consisting of any values within these ranges).

In one embodiment, the lithium salt is selected from at least one of lithium hexafluorophosphate (LiPF₆), lithium bis(fluorosulfonyl)imide (LiFSI), lithium difluoro(oxalato)borate (LiODFB) and lithium difluorophosphate (LiPO₂F₂).

In one embodiment, the electrolyte also contains a solvent.

In a preferred embodiment, the electrolyte also includes 40-80 parts by weight of solvent (for example, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79 or 80, or a sub-range consisting of any values within these ranges).

In a preferred embodiment, the electrolyte also includes 40-80wt% of solvent (for example, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79 or 80wt%, or a sub-range consisting of any values within these ranges).

In one embodiment, the solvent is selected from at least one of ethylene carbonate (EC), ethyl methyl carbonate (EMC) and dimethyl carbonate (DMC).

In one embodiment, the content of the additive is greater than 0 and less than or equal to 35 parts by weight (for example, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34 or 35, or a sub-range consisting of any values within these ranges). Preferably, the content of the additive is greater than or equal to 1 and less than or equal to 30 parts by weight. Most preferably, the content of the additive is greater than or equal to 4 and less than or equal to 25 parts by weight.

In one embodiment, the content of the additive is greater than 0wt% and less than or equal to 35wt% (for example, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34 or 35wt%, or a sub-range consisting of any values within these ranges). Preferably, the content of the additive is greater than or equal to 1wt% and less than or equal to 30wt%. Most preferably, the content of the additive is greater than or equal to 4wt% and less than or equal to 25wt%.

In one embodiment, the additive also contains propylene sulfite (PS) and/or adipodinitrile (ADN).

In one embodiment, the electrolyte contains LiPF₆, DMC, EMC, EC and FEC, and an optional component selected from the following: LiODFB, ADN, LiPO₂F₂, LiFSI and PS.

In one embodiment, the electrolyte contains the following components:
10-20 parts by weight of LiPF₆ (for example, 10, 11, 12, 13, 14, 15, 16, 17, 18, 19 or 20, or a sub-range consisting of any values within these ranges);
35-65 parts by weight of DMC (for example, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64 or 65, or a sub-range consisting of any values within these ranges);
1-15 parts by weight of EMC (for example, 1, 2, 3, 4, 5, 6, 7, 8, 9, 10, 11, 12, 13, 14 or 15, or a sub-range consisting of any values within these ranges);
1-25 parts by weight of EC (for example, 1, 2, 3, 4, 5, 6, 7, 8, 9, 10, 11, 12, 13, 14, 15, 16, 17, 18, 19, 20, 21, 22, 23, 24 or 25, or a sub-range consisting of any values within these ranges);
greater than 0 and less than or equal to 25 parts by weight of FEC (for example, 1, 2, 3, 4, 5, 6, 7, 8, 9, 10, 11, 12, 13, 14, 15, 16, 17, 18, 19, 20, 21, 22, 23, 24 or 25, or a sub-range consisting of any values within these ranges); and
an optional component from the following (a value of 0 means the omission of the component):
   0-5 parts by weight of LiODFB (for example, 1, 2, 3, 4 or 5, or a sub-range consisting of any values within these ranges);
   0-5 parts by weight of ADN (for example, 1, 2, 3, 4 or 5, or a sub-range consisting of any values within these ranges);
   0-5 parts by weight of LiPO₂F₂ (for example, 1, 2, 3, 4 or 5, or a sub-range consisting of any values within these ranges);
   0-10 parts by weight of LiFSI (for example, 1, 2, 3, 4, 5, 6, 7, 8, 9 or 10, or a sub-range consisting of any values within these ranges); and
   0-5 parts by weight of PS (for example, 1, 2, 3, 4 or 5, or a sub-range consisting of any values within these ranges).

In one embodiment, the electrolyte contains the following components:
10-20wt% of LiPF₆ (for example, 10, 11, 12, 13, 14, 15, 16, 17, 18, 19 or 20wt%, or a sub-range consisting of any values within these ranges);
35-65wt% of DMC (for example, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64 or 65wt%, or a sub-range consisting of any values within these ranges);
1-15wt% of EMC (for example, 1, 2, 3, 4, 5, 6, 7, 8, 9, 10, 11, 12, 13, 14 or 15wt%, or a sub-range consisting of any values within these ranges);
1-25wt% of EC (for example, 1, 2, 3, 4, 5, 6, 7, 8, 9, 10, 11, 12, 13, 14, 15, 16, 17, 18, 19, 20, 21, 22, 23, 24 or 25wt%, or a sub-range consisting of any values within these ranges);
greater than 0wt% and less than or equal to 25wt% of FEC (for example, 1, 2, 3, 4, 5, 6, 7, 8, 9, 10, 11, 12, 13, 14, 15, 16, 17, 18, 19, 20, 21, 22, 23, 24 or 25wt%, or a sub-range consisting of any values within these ranges); and
an optional component from the following (a value of 0 means the omission of the component):
   0-5wt% of LiODFB (for example, 1, 2, 3, 4 or 5wt%, or a sub-range consisting of any values within these ranges);
   0-5wt% of ADN (for example, 1, 2, 3, 4 or 5wt%, or a sub-range consisting of any values within these ranges);
   0-5wt% of LiPO₂F₂ (for example, 1, 2, 3, 4 or 5wt%, or a sub-range consisting of any values within these ranges);
   0-10wt% of LiFSI (for example, 1, 2, 3, 4, 5, 6, 7, 8, 9 or 10wt%, or a sub-range consisting of any values within these ranges); and
0-5wt% of PS (for example, 1, 2, 3, 4 or 5wt%, or a sub-range consisting of any values within these ranges).

In a preferred embodiment, the electrolyte contains the following components:
12-17 parts by weight of LiPF₆; 40-60 parts by weight of DMC; 4-10 parts by weight of EMC; 5-20 parts by weight of EC; greater than 0 and less than or equal to 20 parts by weight of FEC; 0-2 parts by weight of LiODFB; 0-1 parts by weight of ADN; 0-1 parts by weight of LiPO₂F₂; 0-5 parts by weight of LiFSI and 0-1 parts by weight of PS.

In a preferred embodiment, the electrolyte includes the following components:
12-17wt% of LiPF₆; 40-60wt% of DMC; 4-10wt% of EMC; 5-20wt% of EC; greater than 0wt% and less than or equal to 20wt% of FEC; 0-2wt% of LiODFB; 0-1wt% of ADN; 0-1wt% of LiPO₂F₂; and 0-5wt% of LiFSI and 0-1wt% of PS.

An illustrative lithium-ion battery may be made by using a method known to a person skilled in the art.

### Specific examples

The examples below describe some embodiments of the present invention; they provide an illustration of the present invention, but do not signify that the present invention is limited to these examples.

A lithium-ion battery was made by the following method:
(1) Preparation of positive electrode sheet: a positive electrode active material, the conductive agent superconductive carbon black and the binder PVDF were added to NMP, and mixed evenly to produce a slurry; the positive electrode slurry was evenly applied to a surface of a positive electrode current collector in the form of aluminum foil of thickness 15µm, and dried at 100°C to remove the NMP, to obtain a positive electrode sheet coated with positive electrode material on one side. The above step was then repeated on the other surface of the aluminum foil, to obtain a positive electrode sheet coated with positive electrode material on both sides. Roller pressing and cutting were then performed to obtain the desired positive electrode sheet.
(2) Preparation of negative electrode sheet: a negative electrode active material (composed of graphite and a silicon-carbon composite, wherein the values of the weight percentage b of the silicon-carbon composite can be seen in **Tables 1 and 2** below), a conductive agent (conductive carbon black and single-walled carbon nanotubes), a binder (carboxymethylcellulose and styrene-butadiene rubber) and deionized water were mixed evenly to prepare a negative electrode slurry. The negative electrode slurry was then applied to a surface of a negative electrode current collector in the form of copper foil of thickness 8µm, and dried at 70°C to remove solvent, to obtain a negative electrode sheet coated with negative electrode material on one side. The above step was then repeated on the other surface of the copper foil, to obtain a negative electrode sheet coated with negative electrode material on both sides. Roller pressing and cutting were then performed to obtain the desired negative electrode sheet. The initial Coulombic efficiency c of the negative electrode sheet was then measured, the specific test method being as follows:
   1) The negative electrode sheet and metal lithium were first assembled into a battery;
   2) the test temperature was 25°C;
   3) the battery was discharged at a constant current rate of 0.05C to 0.005V, to obtain the initial discharge capacity D0;
   4) resting for 10min;
   5) charging was performed at a constant current rate of 0.05C to 1.5V, to obtain the initial charge capacity C0;
   6) C0/D0 is the negative electrode's initial Coulombic efficiency, with specific values shown below in **Tables 1 and 2.**
(3) Preparation of the electrolyte: The electrolyte consisted of the following components: 12-17wt% of LiPF₆; 40-60wt% of DMC; 4-10wt% of EMC; 5-20wt% of EC; greater than 0wt% and less than or equal to 20wt% of FEC (the percentage content of FEC in the electrolyte is expressed as a, see the specific values in **Tables 1 and 2 below**); 0-2wt% of LiODFB; 0-1wt% of ADN; 0-1wt% of LiPO₂F₂; and 0-5wt% of LiFSI and 0-1wt% of PS. The conductivity of some electrolytes was further measured as d in ms/cm, with specific values shown below in **Table 2.**
(4) The positive electrode sheet, the negative electrode sheet and a ceramic separator (PE+Al₂O₃) were assembled by rolling to form a cylindrical rolled core, welded to tabs, fitted into a steel casing and subjected to groove rolling, and baked for 24h at a temperature of 80°C to remove moisture. Then electrolyte was injected, and activation was performed by a suitable activation process to obtain a lithium battery.

The lithium batteries prepared as above were divided into groups A-D (multiple batteries were prepared in each group, to be used in different testing), and subjected to subsequent testing to determine their cycling performance and safety performance.

**Table 1 Parameters a, b, c and b/(a*c) for lithium-ion batteries**

| Group | No. | Percentage content of FEC in electrolyte, a | Percentage by weight of silicon-carbon composite in the negative electrode active material, b | Initial Coulombic efficiency of negative electrode, c | b/(a*c) |
|---|---|---|---|---|---|
| A | 1 | 0.05 | 0.07 | 0.91 | 1.5 |
| | 2 | 0.07 | 0.10 | 0.91 | 1.6 |
| | 3 | 0.08 | 0.12 | 0.91 | 1.6 |
| | 4 | 0.11 | 0.15 | 0.91 | 1.5 |
| | 5 | 0.13 | 0.20 | 0.91 | 1.7 |
| B | 1 | 0.02 | 0.07 | 0.91 | 3.8 |
| | 2 | 0.04 | 0.12 | 0.91 | 3.3 |
| | 3 | 0.06 | 0.15 | 0.91 | 2.7 |
| | 4 | 0.19 | 0.15 | 0.91 | 0.9 |
| | 5 | 0.06 | 0.20 | 0.91 | 3.7 |
| | 6 | 0.25 | 0.20 | 0.91 | 0.9 |
| | 7 | 0.05 | 0.07 | 0.60 | 2.3 |

**Table 2 Parameters a, b, c, d and (b*d)/(a*c) for lithium-ion batteries**

| Group | No. | Percentage content of FEC in electrolyte, a | Percentage by weight of silicon-carbon composite in the negative electrode active material, b | Initial Coulombic efficiency of negative electrode, c | Electrolyte conductivity d (ms/cm) | (b*d)/(a*c) |
|---|---|---|---|---|---|---|
| C | 1 | 0.04 | 0.07 | 0.91 | 10.1 | 19.4 |
| | 2 | 0.06 | 0.10 | 0.91 | 10.1 | 18.5 |
| | 3 | 0.08 | 0.12 | 0.91 | 10.1 | 16.6 |
| | 4 | 0.10 | 0.15 | 0.91 | 10.1 | 16.6 |
| | 5 | 0.15 | 0.20 | 0.91 | 10.1 | 14.8 |
| D | 1 | 0.02 | 0.07 | 0.91 | 10.1 | 38.8 |
| | 2 | 0.04 | 0.12 | 0.91 | 10.1 | 33.3 |
| | 3 | 0.04 | 0.15 | 0.91 | 10.1 | 41.6 |
| | 4 | 0.20 | 0.15 | 0.91 | 10.1 | 8.3 |
| | 5 | 0.06 | 0.20 | 0.91 | 10.1 | 37.0 |
| | 6 | 0.25 | 0.20 | 0.91 | 10.1 | 8.9 |
| | 7 | 0.05 | 0.07 | 0.91 | 6.10 | 9.4 |

### Test Example 1 Cycle Capacity Retention Rate Test

This test measures the cycle performance of the lithium-ion battery by measuring the cycle capacity retention rate after multiple (600) charge and discharge cycles of the battery. The higher the cycle capacity retention rate, the better the cycle performance of the battery.

The specific testing procedure was as follows:
1) Test temperature of 25°C;
2) 2C constant-current charging to 4.2V, constant-voltage charging to 0.01C;
3) resting for 10min;
4) 4C constant-current discharging to 2.5V;
6) resting for 30min; and
7) Steps 2) to 6) were performed for a total of 600 cycles.

The discharge capacity of Step 4 was measured at the first and 600th cycle, respectively. The discharge capacity at Step 4) of the 600th cycle divided by the discharge capacity at Step 4) of the 1st cycle, multiplied by 100%, gives the cycle capacity retention rate.

See **Table 3** below for specific results.

**Table 3 600-cycle capacity retention rate (%) test results**

| Group | No. | Capacity retention rate (%) |
|---|---|---|
| A | 1 | 92 |
| | 2 | 90 |
| | 3 | 86 |
| | 4 | 85 |
| | 5 | 79 |
| B | 1 | 47 |
| | 2 | 51 |
| | 3 | 48 |
| | 4 | 84 |
| | 5 | 37 |
| | 6 | 81 |
| | 7 | 50 |
| C | 1 | 95 |
| | 2 | 93 |
| | 3 | 89 |
| | 4 | 88 |
| | 5 | 82 |
| D | 1 | 50 |
| | 2 | 54 |
| | 3 | 51 |
| | 4 | 87 |
| | 5 | 40 |
| | 6 | 84 |
| | 7 | 37 |

As can be seen from **Table 3,** groups A and C have relatively high capacity retention rates overall. Except for A5, which is 79% (close to 80%), the remaining batteries are above 80%. Moreover, groups A and C each have two batteries that reached more than 90%. For groups B and D, only two batteries in each group have a capacity retention rate of more than 80%, and the remaining batteries are well below 80%. This indicates that the batteries in groups A and C have relatively good cycling stability.

### Test Example 2 Gas production test for storage at 60°C with 100% SOC (State of Charge of the battery)

The main purpose of this test was to measure the safety and stability of the lithium-ion batteries when stored at high temperature (60°C) with a high SOC (100%).

The specific testing procedure was as follows:
A. Pre-processing: The lithium batteries prepared above were subjected to constant-voltage charging to 4.2V using a constant current of 15A, the current condition for constant voltage cutoff being 100mA. A Neware battery charging/discharging testing device CT-4032 was used as a charging/discharging device.
B. Storage at high temperature: the batteries were placed in a temperature box at a temperature of 60°C; and to keep the temperature uniform, the batteries were not in contact with the inner walls of the box body or the supporting frame. The temperature box was the battery-aging, explosion-proof box GK-GW600-200 from Guangbo Testing Equipment Co., Ltd. in Dongguan City, the temperature stability being 60 ± 1°C.
C. Gas production test: The gas inside the battery was released, and the amount of gas produced by the battery was calibrated using the Archimedes water displacement method.

The specific experimental results are shown in **Table 4.**

**Table 4 Gas production test results for storage at 60°C with 100% SOC**

| Group | No. | Gas production during storage (ml) |
|---|---|---|
| A | 1 | 11.4 |
| | 2 | 12.5 |
| | 3 | 13.9 |
| | 4 | 15.2 |
| | 5 | 18.4 |
| B | 1 | 6.0 |
| | 2 | 12.2 |
| | 3 | 10.9 |
| | 4 | 27.5 |
| | 5 | 14.2 |
| | 6 | 30.2 |
| | 7 | 22.4 |
| C | 1 | 10.4 |
| | 2 | 11.5 |
| | 3 | 12.9 |
| | 4 | 14.2 |
| | 5 | 17.4 |
| D | 1 | 5.0 |
| | 2 | 11.2 |
| | 3 | 9.9 |
| | 4 | 26.5 |
| | 5 | 13.2 |
| | 6 | 29.2 |
| | 7 | 25.7 |

As can be seen from **Table 4,** the amount of gas production was lower in groups A and C, and was stable in the range of 10 to 19ml. In groups B and D, although some batteries produced less gas, two batteries in each group produced about 30ml of gas. As a result, the safety and stability of the lithium-ion batteries in groups A and C stored under high-temperature and high-SOC conditions are better.

In addition, by combining the data in **Tables 3 and 4,** it can be seen that the batteries in groups A and C not only have a higher cycle capacity retention rate, but also have lower gas production. That is, the battery cycle performance and safety/stability of groups A and C are better.

## Claims

1. A lithium-ion battery, **characterized in that**: the lithium-ion battery includes at least a negative electrode and an electrolyte;
wherein the electrolyte includes an additive, the additive contains at least a fluoroethylene carbonate (FEC), and the mass percentage of the FEC in the electrolyte is a;
the electrolyte has a conductivity of d ms/cm;
wherein, the initial Coulombic efficiency of the negative electrode is c, the negative electrode includes a negative electrode active material, the negative electrode active material includes a silicon-based material, and the mass percentage of the silicon-based material in the negative electrode active material is b; and a, b, c, and d meet at least one of the following conditions:
0<a≤0.40; 0<b≤0.40; 0.70≤c<1.00 and/or 4.0≤d≤18.0.

2. The lithium-ion battery according to claim 1, wherein, the silicon-based material is selected from silicon carbon compounds (e.g. silicon carbide, SiC), silicon-carbon composites (Si/C, e.g. vapor deposited silicon-carbon, e.g., third-generation vapor deposited silicon-carbon), silicon oxides (e.g., silicon dioxide, SiO₂) and elemental silicon, and preferably silicon-carbon composites (Si/C, for example, vapor deposited silicon-carbon, e.g., third-generation vapor deposited silicon-carbon).

3. The lithium-ion battery according to any one of the preceding claims, wherein, a, b, c, and d meet at least: 1.0≤b/(a*c)≤2.6; preferably, 1.0≤b/(a*c)≤2.0; and most preferably, 1.5≤b/(a*c)≤1.7.

4. The lithium-ion battery according to any one of the preceding claims, wherein, a, b, c, and d meet at least: 10.0≤(b*d)/(a*c)≤33.0; preferably, 12.0≤(b*d)/(a*c)≤25.0; and most preferably, 14.0≤(b*d)/(a*c)≤20 0.

5. The lithium-ion battery according to any one of the preceding claims, wherein a, b, c, or d meet at least one of:
wherein, 0.01<a≤0.30; and preferably, 0.04<a≤0.25;
wherein, 0.05<b≤0.35; and preferably, 0.07<b<0.30;
wherein, 0.80≤c<1.00; and preferably, 0.85≤c<1.00; or
wherein, 6.0≤d≤16.0; and preferably, 10.0≤d≤12.0.

6. The lithium-ion battery according to any one of the preceding claims, wherein, the negative electrode active material also includes carbon, such as natural or artificial graphite, hard carbon or soft carbon; and preferably, the negative electrode active material is composed of a silicon-carbon composite (Si/C, for example, vapor deposited silicon-carbon) and carbon (for example, natural or artificial graphite, hard carbon or soft carbon, wherein natural or artificial graphite is preferred).

7. The lithium-ion battery according to any one of the preceding claims, wherein, the reversible gram-specific capacity of the silicon-carbon composite is at least 1800mAh/g.

8. The lithium-ion battery according to any one of the preceding claims, wherein, the electrolyte also contains a lithium salt, and preferably, the lithium salt content in the electrolyte is 9-20wt%.

9. The lithium-ion battery according to claim 8, wherein the lithium salt is selected from at least one of lithium hexafluorophosphate (LiPF₆), lithium bis(fluorosulfonyl)imide (LiFSI), lithium difluoro(oxalato)borate (LiODFB) and lithium difluorophosphate (LiPO₂F₂).

10. The lithium-ion battery according to any one of the preceding claims, wherein, the electrolyte also contains a solvent, wherein the solvent content of the electrolyte is 40-80wt%.

11. The lithium-ion battery according to claim 10, wherein the solvent is selected from at least one of ethylene carbonate (EC), ethyl methyl carbonate (EMC) and dimethyl carbonate (DMC).

12. The lithium-ion battery according to any one of the preceding claims, wherein, the content of the additive in the electrolyte is greater than 0wt% and less than or equal to 35wt%; preferably, the content of the additive is greater than or equal to 1wt% and less than or equal to 30wt%; and most preferably, the content of the additive is greater than or equal to 4wt% and less than or equal to 25wt%.

13. The lithium-ion battery according to any one of the preceding claims, wherein, the additive also contains propylene sulfite (PS) and/or adipodinitrile (ADN).

14. The lithium-ion battery according to any one of the preceding claims, wherein, the electrolyte contains LiPF₆, DMC, EMC, EC and FEC, and an optional component selected from the following: LiODFB, ADN, LiPO₂F₂, LiFSI and PS.

15. The lithium-ion battery according to any one of the preceding claims, wherein, the electrolyte contains the following components:
10-20wt% of LiPF₆; 35-65wt% of DMC; 1-15wt% of EMC; 1-25wt% of EC; greater than 0wt% and less than or equal to 25wt% of FEC; 0-5wt% of LiODFB; 0-5wt% of ADN; 0-5wt% of LiPO₂F₂; and 0-10wt% of LiFSI and 0-5wt% of PS,
and preferably, wherein, the electrolyte contains the following components:
12-17wt% of LiPF₆; 40-60wt% of DMC; 4-10wt% of EMC; 5-20wt% of EC; greater than 0wt% and less than or equal to 20wt% (preferably greater than or equal to 1wt% and less than or equal to 20wt%, and most preferably greater than or equal to 4wt% and less than or equal to 20wt%) of FEC; 0-2wt% of LiODFB; 0-1wt% of ADN; 0-1wt% of LiPO₂F₂; and 0-5wt% of LiFSI and 0-1wt% of PS.
